(19) Europäisches Patentamt
European Patent Office
Office européen des brevets

(11) **EP 4 021 107 A1**

(12) **EUROPEAN PATENT APPLICATION**
published in accordance with Art. 153(4) EPC

(43) Date of publication:
**29.06.2022 Bulletin 2022/26**

(21) Application number: **19943608.0**

(22) Date of filing: **23.08.2019**

(51) International Patent Classification (IPC):
**H04W 72/04** (2009.01)

(52) Cooperative Patent Classification (CPC):
**H04W 72/04**

(86) International application number:
**PCT/JP2019/033156**

(87) International publication number:
**WO 2021/038658 (04.03.2021 Gazette 2021/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **TAKAHASHI, Yuki**
  **Tokyo 100-6150 (JP)**
• **NAGATA, Satoshi**
  **Tokyo 100-6150 (JP)**
• **WANG, Lihui**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL AND WIRELESS COMMUNICATION METHOD**

(57) A terminal according to an aspect of the present disclosure includes a receiving section configured to receive information related to one or a plurality of frequency hopping modes, and a control section configured to determine, based on information related to the same frequency hopping mode or information related to different frequency hopping modes, a frequency hopping mode to be applied to each of a first uplink shared channel to which repetitive transmission in a first unit is applied and a second uplink shared channel to which repetitive transmission in a second unit shorter than the first unit is applied.

FIG. 8A

図8B

FIG. 8C

**Description**

Technical Field

The present disclosure relates to a terminal and a radio communication method in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In an existing LTE system (for example, 3GPP Rel. 8 to Rel. 14), a user terminal (UE: User Equipment) controls reception of a downlink shared channel (for example, Physical Downlink Shared Channel (PDSCH)) based on downlink control information (DCI; also referred to as DL assignment or the like) from a base station. The user terminal controls transmission of an uplink shared channel (for example, Physical Uplink Shared Channel (PUSCH)), based on the DCI (also referred to as UL grant or the like).

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

Discussions have been made on transmission of a plurality of UL channels in a repetition unit shorter than a given time unit (for example, slot) in a future radio communication system (for example, NR). Discussions have been also made on support of scheduling of at least one of a given channel and a given signal (also referred to as channel/signal) over a slot boundary at a given transmission occasion in NR. For example, it has been discussed to divide a shared channel scheduled over a slot boundary (or across a slot boundary) into a plurality of segments when controlling its transmission or reception.

For NR, it has been discussed to apply frequency hopping to an UL channel transmitted in a repetition unit shorter than a slot. However, discussions have not been sufficiently made on how to control frequency hopping in such a case.

It is an object of the present disclosure to provide a terminal and a radio communication method that can appropriately control application of frequency hopping to a signal or channel transmitted in a repetition unit shorter than a slot.

Solution to Problem

A terminal according to an aspect of the present disclosure includes: a receiving section configured to receive information related to one or a plurality of frequency hopping modes; and a control section configured to determine, based on information related to the same frequency hopping mode or information related to different frequency hopping modes, a frequency hopping mode to be applied to each of a first uplink shared channel to which repetitive transmission in a first unit is applied and a second uplink shared channel to which repetitive transmission in a second unit shorter than the first unit is applied .

Advantageous Effects of Invention

According to an aspect of the present disclosure, it is possible to appropriately control application of frequency hopping to a signal or channel transmitted in a repetition unit shorter than a slot.

Brief Description of Drawings

FIG. 1 is a diagram to show an example of frequency hopping applied to PUSCHs allocated in units of slots;
FIGS. 2A and 2B are diagrams for description of parameters applied to frequency hopping;
FIG. 3 is a diagram to show an example of allocation of shared channels (for example, PUSCHs);
FIG. 4 is a diagram to show an example of multi-segment transmission;
FIGS. 5A and 5B are diagrams to show an example of frequency hopping applicable to a mini-slot based PUSCH;
FIG. 6 is a diagram to show another example of frequency hopping applicable to a mini-slot based PUSCH;
FIG. 7 is a diagram to show another example of frequency hopping applicable to a mini-slot based PUSCH;
FIGS. 8A to 8C are diagrams to show an example of frequency hopping mode configuration;
FIGS. 9A and 9B are diagrams to show an example of frequency hopping mode configuration or selection;
FIGS. 10A and 10B are diagrams to show another example of frequency hopping mode configuration or selection;
FIGS. 11A and 11B are diagrams to show an example of a RAR grant and a MAC configuration corresponding to the RAR grant;
FIG. 12 is a diagram to show an example of a schematic structure of a radio communication system according to one embodiment;
FIG. 13 is a diagram to show an example of a structure of a base station according to one embodiment;
FIG. 14 is a diagram to show an example of a structure of a user terminal according to one embodiment; and
FIG. 15 is a diagram to show an example of a hardware structure of the base station and the user terminal according to one embodiment.

Description of Embodiments

(Slot Based Repetitive Transmission)

In NR, PUSCH or PDSCH transmission with repetition has been discussed. Specifically, in NR, discussions have been made on transmission of a TB based on the same data at one or more transmission occasions. Each transmission occasion appears within one slot, and the TB may be transmitted N times in N consecutive slots. In this case, transmission occasion, slot, and repetition may be interchangeably interpreted.

This repetitive transmission may be referred to as slot-aggregation transmission, multi-slot transmission, or the like. The number N of repetitions (aggregation number or aggregation factor) may be specified for a UE by at least one of a higher-layer parameter (for example, "pusch-AggregationFactor" or "pdsch-AggregationFactor" of RRC IE) and DCI.

The same symbol allocation may be applied to the N consecutive slots. The same symbol allocation to the slots may be determined as described above for time-domain resource allocation. For example, the UE may determine symbol allocation in each slot based on a start symbol S and a symbol number L determined based on a value m of a given field (for example, TDRA field) in the DCI. Note that the UE may determine the initial slot based on K2 information determined based on the value m of a given field (for example, TDRA field) in the DCI.

However, a redundancy version (RV) applied to a TB based on the same data may be same or at least partially different among the N consecutive slots. For example, the RV applied to the TB in the n-th slot (transmission occasion or repetition) may be determined based on the value of a given field (for example, RV field) in the DCI.

When resources allocated in the N consecutive slots have, in at least one symbol, communication direction difference from UL, DL, or flexible of each slot specified by at least one of uplinkdownlink communication direction indicating information (for example, "TDD-UL-DL-ConfigCommon" and "TDD-UL-DL-ConfigDedicated" of RRC IE) for TDD control and a slot format identifier (slot format indicator) of the DCI (for example, DCI format 2_0), the resource of a slot including the symbol may not be transmitted(or received).

(Frequency Hopping)

In NR, frequency hopping (FH) may be applied to a signal/channel. For example, inter-slot frequency hopping or intra-slot frequency hopping may be applied to a PUSCH.

Intra-slot FH may be applied to both an above-described PUSCH transmitted with repetition and a PUSCH transmitted without repetition (once). Inter-slot FH may be applied to an above-described PUSCH transmitted with repetition.

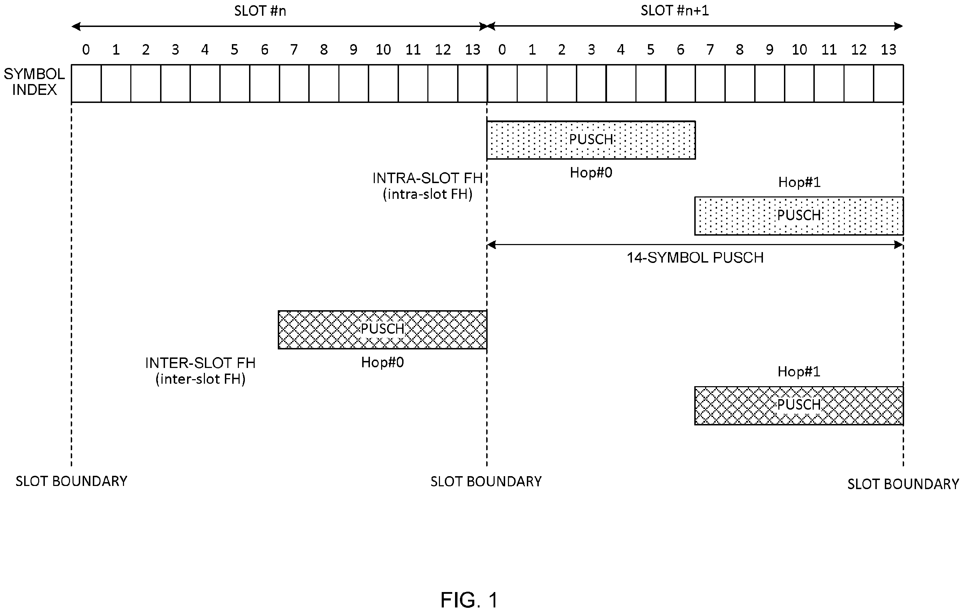

FIG. 1 shows a case in which intra-slot FH is applied to a PUSCH (in this example, PUSCH of a 14-symbol length) transmitted without repetition (once). FIG. 1 shows a case in which inter-slot FH is applied to PUSCHs (in this example, PUSCHs of a sevensymbol length) transmitted with repetition (twice) in two slots (slot #n and slot #n+1).

An FH mode to be applied and a frequency offset (also simply referred to as offset) between frequency hops (also simply referred to as hops) (for example, between a first hop and a second hop) may be determined based on at least one of a higher-layer parameter and the value of a given field in the DCI. The higher-layer parameter may be a higher-layer parameter (for example, PUSCH-Config) that gives notification of a PUSCH configuration or a higher-layer parameter (for example, ConfiguredGrantConfig) that gives notification of a configuredgrant-based PUSCH configuration.

For example, a plurality of offsets may be configured by the higher-layer parameter for a grant (dynamic grant) by the DCI or a configured grant (type 2 configured grant), activation of which is controlled by the DCI, and one of the plurality of offsets may be specified by the value of a given field in the DCI.

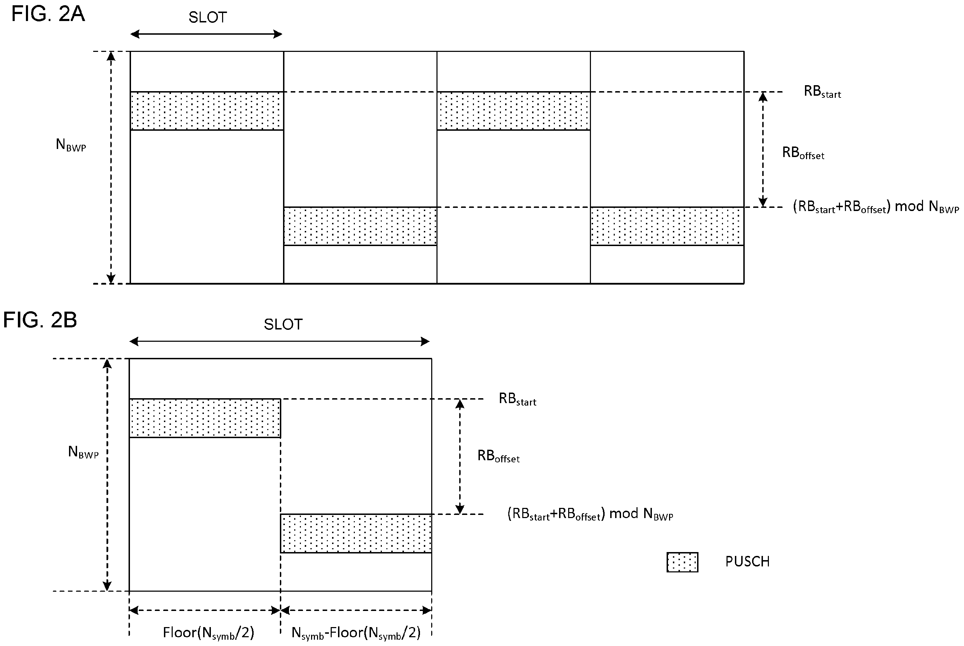

As shown in FIG. 2A, the inter-slot frequency hopping is applied to repetitive transmission, and frequency hopping may be controlled for each slot. The start RB of each hop may be determined based on at least one of an index $RB_{start}$ of the start RB of a frequency domain resource allocated to a PUSCH, an offset $RB_{offset}$ provided by at least one of the higher-layer parameter and the value of a given field in the DCI, and a size (the number of RBs) $N_{BWP}$ in a given band (for example, BWP).

For example, as shown in FIG. 2A, the index of the start RB of a slot of an even slot number is $RB_{start}$, and the index of the start RB of a slot of an odd slot number may be calculated (for example, by Expression (1) below) by using $RB_{start}$, $RB_{offset}$, and $N_{BWP}$.

$$\text{Expression (1)}$$

$$(RB_{start} + RB_{offset}) \bmod N_{BWP}$$

The UE may determine a frequency domain resource (for example, resource block or physical resource block (PRB)) allocated to each slot (repetition or transmission occasion) determined based on the value of a given field (for example, frequency domain resource allocation (FDRA) field) in the DCI. The UE may determine $RB_{start}$ based on the value of the FDRA field.

Note that, as shown in FIG. 2A, no frequency hopping may be applied in each slot when the inter-slot frequency hopping is applied.

As shown in FIG. 2B, the intra-slot frequency hopping may be applied to transmission without repetition or may be applied in each slot (transmission occasion) of repetitive transmission although not shown. In FIG. 2B, the start RB of each hop may be determined similarly to the case of the inter-slot frequency hopping described with reference to FIG. 2A.

In the intra-slot frequency hopping in FIG. 2B, the number of symbols of each hop (boundary of each hop or frequency hopping boundary) may be determined based on the length ($N_{symb}^{PUSCH, s}$) of a PUSCH in one slot. For example, the first hop and the second hop may be determined by Expression (2) below.

$$\text{Expression (2)}$$

$$\text{First hop} \quad \left\lfloor N_{symb}^{PUSCH,s} / 2 \right\rfloor$$

$$\text{Second hop} \quad N_{symb}^{PUSCH,s} - \left\lfloor N_{symb}^{PUSCH,s} / 2 \right\rfloor$$

The time-domain resource allocation, the repetitive transmission, and the frequency hopping described above are designed based on a premise that a time-domain resource allocated to a signal/channel at a transmission occasion is in a single slot (without across a slot boundary).

(Mini-slot based Repetitive Transmission/Multi-Segment Transmission)

As described above, it has been discussed that the UE allocates a time-domain resource (for example, a given number of symbols) in a single slot to a PUSCH or a PDSCH at a transmission occasion in an existing system (for example, 3GPP Rel. 15).

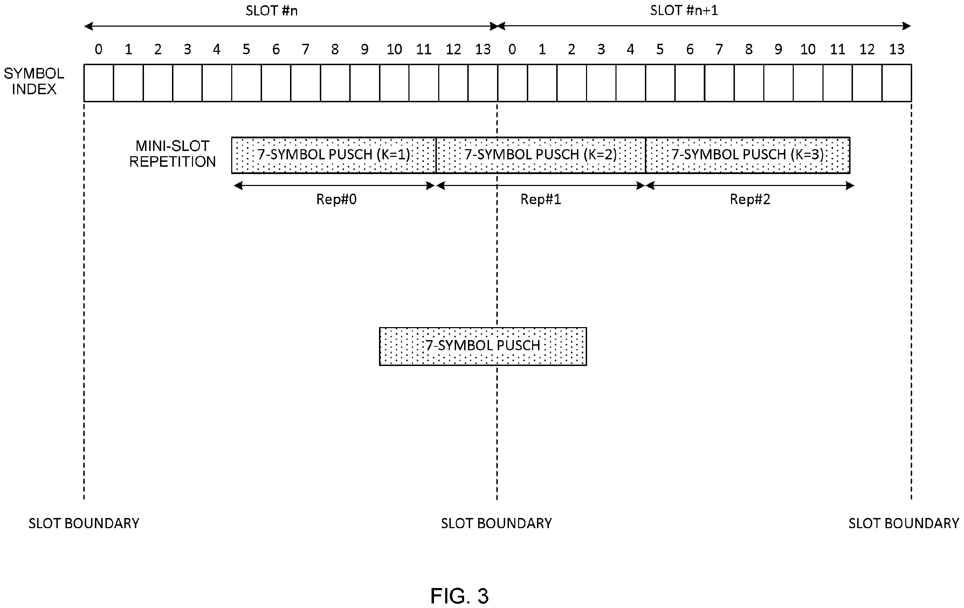

However, in NR (for example, Rel. 16 or later), it is assumed that repetitive transmission is applied in a unit (for example, mini-slot base or sub-slot base) shorter than a slot to a PUSCH (or PDSCH) at a transmission occasion. It is also assumed that, when PUSCHs transmitted in repetitions (for example, K PUSCHs) are mapped to a plurality of slots, at least one PUSCH is allocated across a slot boundary (or over a plurality of slots) (refer to FIG. 3).

FIG. 3 shows a case in which part of PUSCHs (Rep #1) is configured or scheduled across a slot boundary in PUSCH transmission in which repetitive transmission is applied three times on the mini-slot base (in this example, in units of seven symbols).

A PUSCH configured or scheduled over slots is not limited to a PUSCH to which repetitive transmission is applied, but may be a PUSCH to which no repetitive transmission is applied or for which a repetition factor is one (refer to FIG. 3). FIG. 3 shows a case in which a PUSCH allocated to symbols #10 to #13 of slot #n and symbols #0 to #3 of slot #n+1 is allocated across a slot boundary.

Channel/signal transmission using a time-domain resource allocated across a slot boundary (over a plurality of slots) is also referred to as multi-segment transmission, two-segment transmission, cross-slot-boundary transmission, discontinuous transmission, multi-division transmission, or the like. Similarly, reception of a channel/signal transmitted across a slot boundary is also referred to as multi-segment reception, two-segment reception, cross-slot-boundary reception, discontinuous reception, multi-division reception, or the like.

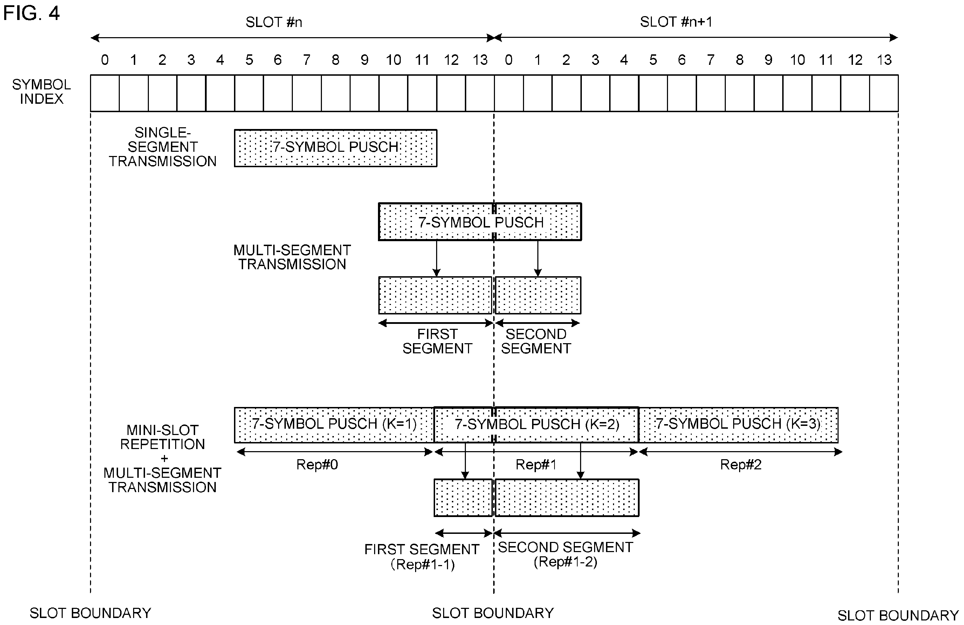

FIG. 4 is a diagram to show an example of multi-segment transmission. Note that multi-segment transmission of PUSCHs is exemplarily shown in FIG. 4 but the PUSCHs may be replaced with other signals/channels (for example, PDSCHs). The following description shows a case in which division into segments is made based on a slot boundary, but the reference of division into segments is not limited to a slot boundary. The following description shows a case in which the symbol length of a PUSCH is seven symbols, but is not limited thereto and the description is similarly applicable to a symbol having a length longer than twosymbol length.

In a case in which time-domain resources over one or more slots at a transmission occasion are allocated to a PUSCH, the UE may separate (divide or split) the PUSCH into a plurality of segments when controlling transmission. For example, the UE may map each segment obtained through division with reference to a slot boundary to symbols in a slot corresponding to the segment.

A "segment" may be a given number of symbols in each slot allocated to one transmission occasion or may be data transmitted by the given number of symbols. For example, when the leading symbol of a PUSCH allocated to one transmission occasion is in a first slot and the last symbol thereof is in a second slot, for the PUSCH, one or more symbols included in the first slot may be a first segment and one or more symbols included in the second slot may be a second segment.

Note that a "segment" is a given data unit and may be at least part of one or a plurality of TBs. For example, each segment may be constituted by one or a plurality of TBs, one or a plurality of code blocks (CBs), or one or a plurality of code block groups (CBGs). Note that one CB is a unit for TB coding and may be one or a plurality of pieces obtained through division (CB segmentation) of a TB. One CBG may include a given number of CBs. Note that each segment obtained through division may be referred to as a short segment.

The size (number of bits) of each segment may be determined based on, for example, at least one of the number of slots to which a PUSCH is allocated, the number of allocated symbols in each slot, and the ratio of the number of allocated symbols in each slot. The number of segments may be determined based on the number of slots to which a PUSCH is allocated.

For example, a PUSCH allocated to symbols #5 to #11 of slot #n is transmitted in a single slot (single-segment) without across a slot boundary. Such PUSCH transmission without across a slot boundary (PUSCH transmission using a given number of symbols allocated in a single slot) may be referred to as single-segment transmission, one-segment transmission, non-segmented transmission, or the like.

A PUSCH allocated to symbols #10 to #13 of slot #n and a PUSCH allocated to symbols #0 to #2 of slot #n+1 are each transmitted across a slot boundary. Such PUSCH transmission across a slot boundary (PUSCH transmission using a given number of symbols allocated in a plurality of slots) may be referred to as multi-segment transmission, two-segment transmission, cross-slot-boundary transmission, or the like.

In addition, as shown in FIG. 4, when PUSCH repetitive transmission is performed at a plurality of transmission occasions, multi-segment transmission may be applied to at least some of the transmission occasions. For example, in FIG. 4, PUSCH transmission is repeated three times, single-segment transmission is applied to the first and third PUSCH transmissions, and multi-segment transmission is applied to the second PUSCH transmission.

Although repetitive transmission using mini-slots of seven symbols is shown in FIG. 4, the unit (for example, symbol length) of repetitive transmission is not limited to that shown in FIG. 4. Repetitive transmission may be referred to as slot-aggregation transmission, multi-slot transmission, or the like. The number N of repetitions (aggregation number or aggregation factor) may be specified for a UE by at least one of a higher-layer parameter (for example, "pusch-AggregationFactor" or "pdsch-AggregationFactor" of RRC IE) and the DCI. Transmission occasion, repetition, slot, mini-slot, and the like may be interchangeably interpreted.

In this manner, it is assumed a case in which a PUSCH (also referred to as nominal PUSCH), allocation (or scheduling) of which is indicated crosses a slot boundary or a case in which a symbol (for example, DL or flexible) that cannot be used for PUSCH transmission exists in the range of one transmission (for example, seven symbols). In such a case, it is thought that the UE divides the PUSCH into a plurality of segments (or repetitions) to control transmission.

As described above, it is assumed that, in NR, repetitive transmission is performed by using a second unit (for example, mini-slot base) shorter than a first unit (for example, slot), but how to control frequency hopping is a problem. For example, as defined in an existing system (for example, Rel. 15), it is also assumed that the inter-slot frequency hopping (inter-slot FH) and the intra-slot frequency hopping (intra-slot FH) as well as another frequency hopping mode are configured or supported.

In such a case, it is a problem how to control application, configuration, selection, or the like of frequency hopping for a signal or channel, repetitive transmission of which is performed in a unit shorter than a slot.

The inventors of the present invention focused on a control method in case where a frequency hopping mode different from those of an existing system is supported for a signal or channel, repetition unit of which is performed in a unit shorter than a slot, in addition to (or in place of) frequency hopping modes same as those of the existing system, and came up with an aspect of the present invention.

An embodiment of the present disclosure will be described in detail with reference to the drawings as follows. Note that aspects described below may be each applied alone or may be applied in combination of at least two.

The following description is made with an example in which frequency hopping is applied to an uplink shared channel, but a signal/channel to which the present invention is applicable is not limited thereto. The following aspects may be applied to any other signal/channel (for example, PUCCH, PDCCH, or PDSCH). The following aspects may be applied to a PUSCH to which repetitive transmission is not applied (or for which the repetition factor is one) .

(Frequency Hopping Mode)

Application of at least one of first to fourth frequency hopping modes described below may be supported for a PUSCH to which repetitive transmission is applied in a unit (for example, mini-slot or sub-slot) shorter than a slot. Note that applicable FH modes are not limited to configurations described below.

<First Frequency Hopping Mode>

In the first FH mode, frequency hopping is applied between PUSCHs to which repetitive transmission is applied (Inter-PUSCH-repetition FH).

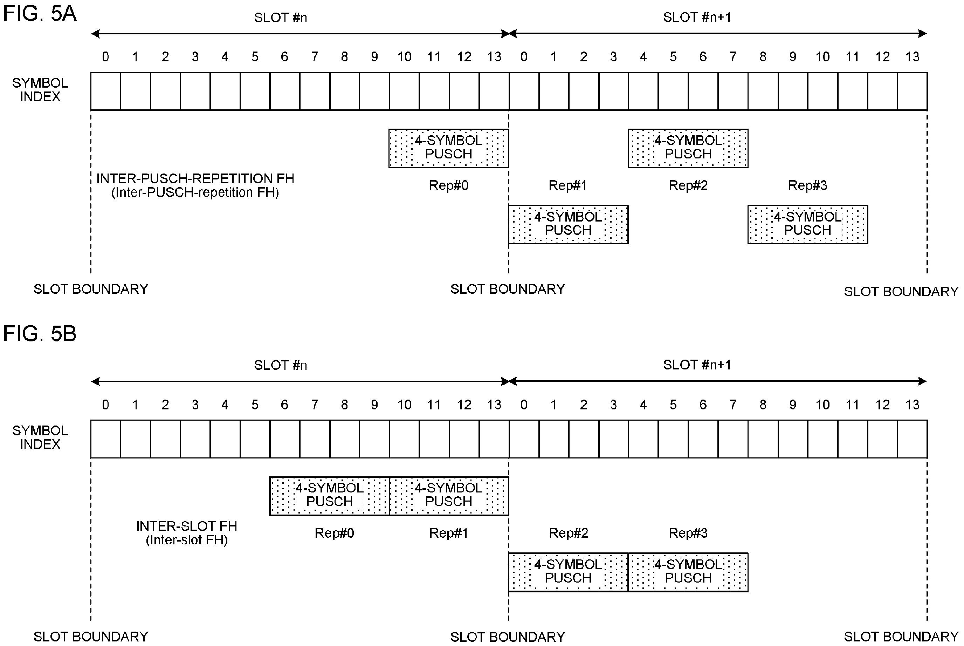

FIG. 5A shows an example of Inter-PUSCH-repetition FH. In the example shown in FIG. 5A, Inter-PUSCH-repetition FH is applied to repetitive transmission of a PUSCH configured with the PUSCH length (or repetition unit) of four symbols and the repetition factor of four (Reps #0 to #3). Note that the PUSCH length and the repetition factor are exemplary, and the present invention is not limited thereto.

When Inter-PUSCH-repetition FH is applied, the UE performs control to distribute adjacent repetitive transmissions in the frequency direction. This example illustrates a case in which even-numbered Reps (Reps #0 and #2) are mapped to a first frequency domain, and odd-numbered Reps (Reps #1 and #3) are mapped to a second frequency domain. Information related to the first frequency domain and the second frequency domain may be configured for the UE by a network (for example, base station).

<Second Frequency Hopping Mode>

In the second FH mode, frequency hopping is applied between slots (Inter-slot FH).

FIG. 5B shows an example of Inter-slot FH. In the example shown in FIG. 5B, Inter-slot FH is applied to repetitive transmission of a PUSCH configured with the PUSCH length (or repetition unit) of four symbols and the repetition factor of four (Reps #0 to #3). Note that the PUSCH length and the repetition factor are exemplary, and the present invention is not limited thereto.

When Inter-slot FH is applied, the UE performs control to distribute repetitive transmission over slots in the frequency direction. This example illustrates a case in which Reps (Reps #0 and #1) transmitted in slot #n are mapped to a first frequency domain, and Reps (Reps #2 and #3) transmitted in slot #n+1 are mapped to a second frequency domain. Information related to the first frequency domain and the second frequency domain may be configured for the UE by the network (for example, base station).

<Third Frequency Hopping Mode>

In the third FH mode, frequency hopping is applied in a PUSCH to which repetitive transmission is applied (Intra-PUSCH-repetition FH).

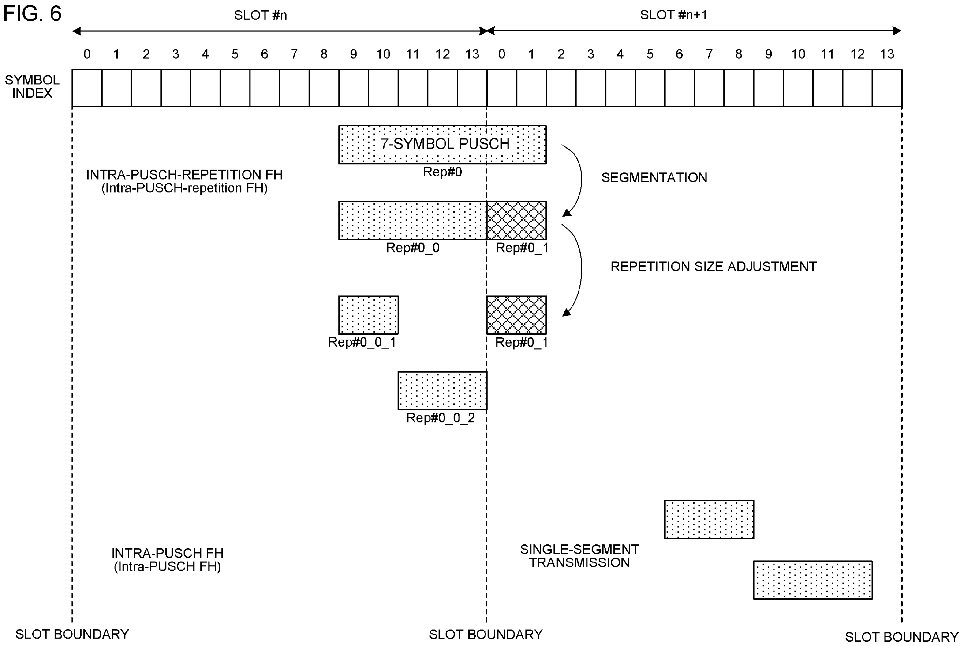

FIG. 6 shows an example of intra-PUSCH-repetition FH. In the example shown in FIG. 6, frequency hopping is applied in a single-segment PUSCH (case 1) and frequency hopping is applied to a segment PUSCH among a plurality of divided segments (one of segment PUSCHs) (case 2). Note that, when frequency hopping is applied in PUSCH transmission for which the repetition factor is one (or PUSCH transmission to which repetitive transmission is not applied), the frequency hopping may be referred to as intra-PUSCH frequency hopping (intra-PUSCH FH).

When PUSCH transmission is divided into a plurality of segments (or when a PUSCH is across a slot boundary), Intra-PUSCH-repetition FH may be applied to one of segment PUSCHs obtained through division (refer to FIG. 6). This example illustrates a case in which intra-PUSCH frequency hopping is applied to a first segment PUSCH (Rep #0_0), and intra-PUSCH frequency hopping is not applied to a second segment PUSCH (Rep #0_1).

When intra-PUSCH-repetition FH (or intra-PUSCH FH) is applied, the UE performs control to distribute transmission of one PUSCH (for example, first segment PUSCH or single-segment PUSCH) in the frequency direction. Intra-PUSCH-repetition FH may be applied when the PUSCH length is equal to or larger than a given value. In FIG. 6, when a plurality of segment PUSCHs (in this example, Reps #0_0 and #0_1) have large difference in the number of symbols, frequency hopping may be applied to a segment PUSCH (in this example, Rep #0_0) having the longest PUSCH length.

<Fourth Frequency Hopping Mode>

In the fourth FH mode, frequency hopping is applied in a slot (Intra-slot FH).

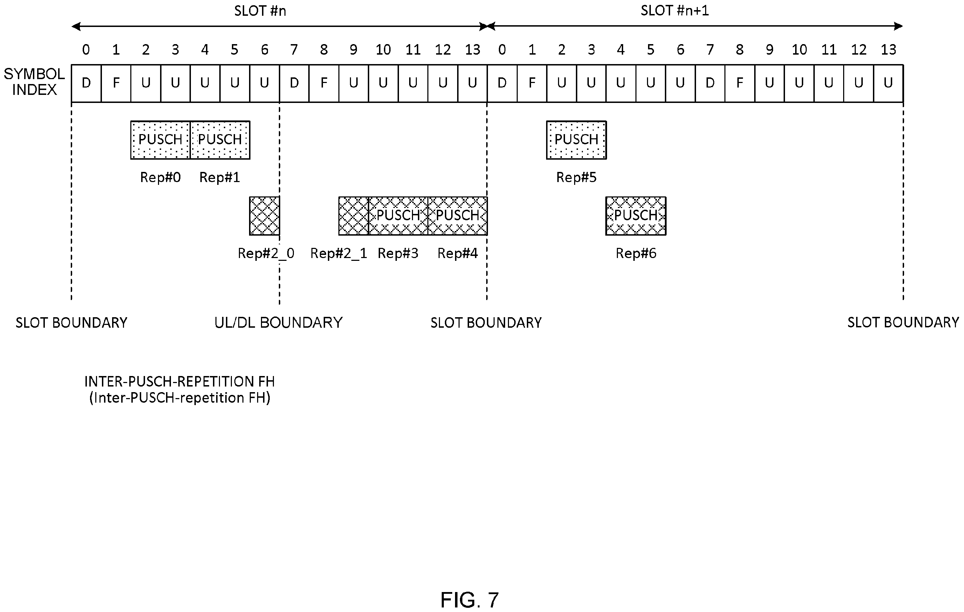

FIG. 7 shows an example of Intra-slot FH. In the example shown in FIG. 7, Intra-slot FH is applied to repetitive transmission of a PUSCH configured with the PUSCH length (or repetition unit) of two symbols and the repetition factor of seven (Reps #0 to #6). This example illustrates a case in which a TDD slot configuration is configured to be D, F, U, U, U, U, U, D, F, U, U, U, U, U. Note that the PUSCH length, the repetition factor, are the slot configuration are exemplary, and the present invention is not limited thereto.

When Intra-slot FH is applied, the UE performs control to distribute, in the frequency direction, a PUSCH transmitted with repetition in a slot. This example illustrates a case in which, among Reps (Reps #0 to #4) transmitted in slot #n, Reps (Reps #0 and #1) in the first half are mapped to a first frequency domain and Reps (Reps #2 to #4) in the second half are mapped to the second frequency domain. Rep #2 is allocated across an UL/DL boundary and thus may be divided into a plurality of segment PUSCHs (Reps #2_0 and #2_1) for transmission.

This example illustrates a case in which, among Reps (Reps #5 to #6) transmitted in slot #n+1, Rep (Rep #5) in the first half is mapped to the first frequency domain and Rep (Rep #6) in the second half is mapped to the second frequency domain. Information related to the first frequency domain and the second frequency domain may be configured for the UE by the network (for example, base station).

In this manner, at least one of the above-described first to fourth FH modes may be supported for mini-slot based PUSCH repetitive transmission. Note that Intra-PUSCH-repetition FH may be interpreted as intra-PUSCH FH) in the following description.

(First Aspect)

In a first aspect, frequency hopping mode configuration will be described below. The description is made with an example in which a first PUSCH to which repetitive transmission is applied in a first unit (for example, slot base) and a second PUSCH to which repetitive transmission is applied in a second unit (for example, mini-slot or sub-slot base) shorter than the first unit, but PUSCHs to which repetitive transmission is applicable are not limited to two types.

A frequency hopping mode (FH mode) configured for slot based repetition and an FH mode configured for mini-slot based repetition may be configured in common (option 1-1) or configured separately (option 1-2).

<Option 1-1>

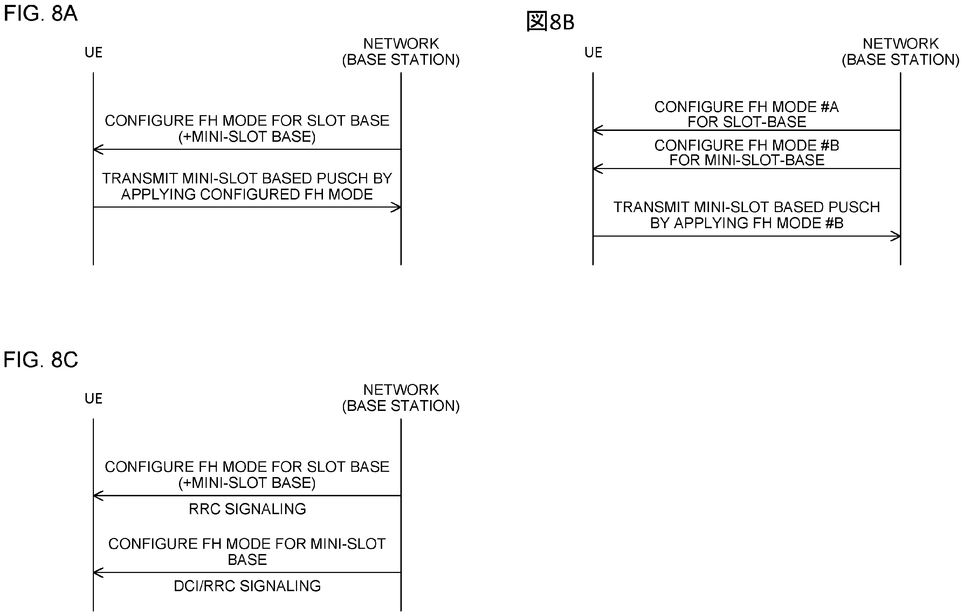

The UE may determine, based on an FH mode configured by the network (for example, FH mode configured for slot based repetition), an FH mode configured for mini-slot based repetition (refer to FIG. 8A). FIG. 8A shows a case in which an FH mode to be applied to mini-slot base is determined based on an FH mode (for example, FH mode for slot base) configured for the UE by the network.

When configuring an FH mode to the UE, the base station may notify the UE of information that specifies the FH mode, and information related to the FH mode, which includes a condition or parameter (such as the start position (for example, start RB) of each hop or a frequency offset) applied in the FH mode.

The same FH mode as an FH mode configured for slot based repetition may be configured for mini-slot based repetition. For example, when inter-slot FH is configured for slot based repetition, the UE may assume that the same inter-slot FH is configured for mini-slot based repetition. In other words, the UE may determine FH modes to be applied to slot base and mini-slot base, based on information related to one FH mode, which is transmitted from the base station.

Alternatively, a given FH mode for slot based repetition and a given FH mode for mini-slot based repetition may be associated with each other. When any one of intra-slot FH and inter-slot FH is configured for slot based repetition, the UE may assume that an FH type associated with each FH type is configured for mini-slot based repetition.

For example, when intra-slot FH is configured for slot based repetition, the UE may assume that intra-PUSCH-repetition FH is configured for mini-slot based repetition. Note that the association between the FH mode for slot base repetition and the FH mode for mini-slot based repetition may be defined in specifications or may be configured for the UE by the base station by higher layer signaling or the like.

When the FH mode for slot based repetition and the FH mode for mini-slot based repetition are configured in common (or jointly), it is possible to suppress increase in overhead of higher layer signaling.

<Option 1-2>

FH modes may be configured separately for slot based repetition and mini-slot based repetition (refer to FIG. 8B). FIG. 8B shows a case in which FH mode #A is configured for slot base and FH mode #B is configured for mini-slot base.

The UE may assume that FH modes are separately configured for slot based repetition and mini-slot based repetition by higher layer signaling or the like. In other words, the UE may determine, based on information related to different FH modes transmitted from the base station, FH modes to be applied for slot base and mini-slot base. Note that the same FH mode may be configured for slot base and mini-slot base.

An FH mode different from an FH mode configured for slot based repetition may be supported or configured for mini-slot based repetition. For example, intra-slot FH and inter-slot FH are supported for slot based repetition. However, at least one of intra-slot FH, inter-slot FH, intra-PUSCH-repetition FH, and inter-PUSCH-repetition FH may be supported for mini-slot based repetition.

The number of FH modes supported for slot based repetition may be different from the number of FH modes supported for mini-slot based repetition.

The FH mode for mini-slot base may be configured separately from the FH mode for slot base (option 1-2-1). For example, when intra-slot FH or inter-slot FH is configured for slot base, the same FH mode or a different FH mode may be configured for mini-slot base. Accordingly, an appropriate FH mode can be configured for each transmission in accordance with a traffic type.

Alternatively, the FH mode for mini-slot based repetition may be configured partially in common (jointly) with the FH mode for slot base (option 1-2-2). For example, when intra-slot FH or inter-slot FH is configured for slot base by higher layer signaling or the like, the UE configures the same FH mode (or an associated FH mode) for mini-slot base.

Moreover, the FH mode for mini-slot base (for example, at least one of intra-PUSCH-repetition FH and inter-PUSCH-repetition FH) may be configured for the UE as an additional FH mode (refer to FIG. 8C). The UE applies the additionally configured FH mode when performing PUSCH transmission.

The additional FH mode may be configured by at least one of higher layer signaling and the DCI or may be selected by the UE under a given condition or when performing given operation. Accordingly, it is possible to suppress increase in overhead of higher layer signaling in initial FH mode configuration and switch to an appropriate FH mode in accordance with a communication situation and the like when mini-slot based repetitive transmission is performed.

In this manner, when the FH mode applied to slot based repetition and the FH mode applied to mini-slot based repetition are different from each other in type or number, it is possible to flexibly configure FH modes by allowing separate configurations of FH types configured for the respective repetitions.

(Second Aspect)

In a second aspect, the number of FH modes applied by the UE (or the number of simultaneously configured FH modes) will be described below. The description is made by using, as an example, an FH mode configured for mini-slot base, but may be applied to an FH mode configured for slot base or may be applied only to an FH mode configured for mini-slot base.

<Configuration of One FH Mode>

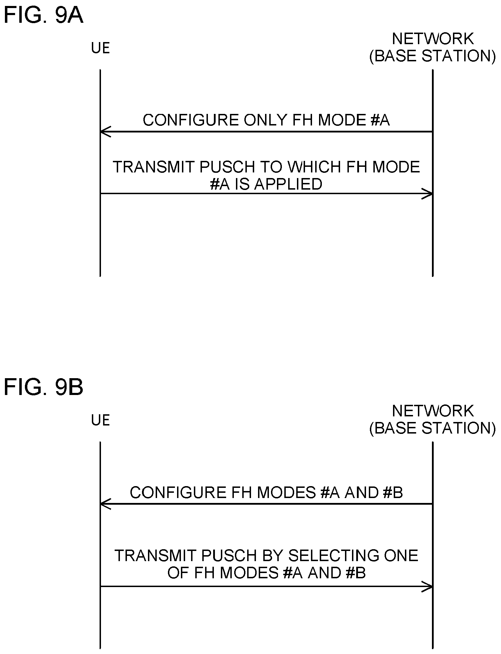

One FH mode (for example, only FH mode #A) may be configured for mini-slot base (refer to FIG. 9A). For example, the network may configure, to the UE, at least one FH mode selected from among inter-slot FH, intra-slot FH, inter-PUSCH-repetition FH, and intra-PUSCH-repetition FH.

When an FH mode is configured in common for slot base and mini-slot base (for example, option 1-1 of the first aspect), the UE may apply, to mini-slot base, an FH mode corresponding to inter-slot FH or intra-slot FH for slot base.

When an FH mode is additionally configured for mini-slot base (for example, option 1-2-2 of the first aspect), the UE may apply the additionally configured FH mode by overwriting (or switching to the mode additionally configured).

UE operation can be simplified by setting the number of FH modes simultaneously configured for the UE to be one.

<Configuration of a plurality of FH modes>

A plurality of FH modes (for example, FH modes #A and #B) may be configured for mini-slot base (refer to FIG. 9B). For example, the network may configure, to the UE, at least two FH modes selected from among inter-slot FH, intra-slot FH, inter-PUSCH-repetition FH, and intra-PUSCH-repetition FH.

The number of FH modes configured simultaneously may be restricted to a given value (for example, two). Alternatively, the combination of a plurality of FH modes configured simultaneously may be restricted to combinations of given FH modes.

For example, inter-PUSCH-repetition FH and intra-PUSCH-repetition FH may be simultaneously configured for the UE (case A). Alternatively, inter-slot FH and intra-PUSCH-repetition FH may be simultaneously configured for the UE (case B). Of course, simultaneously configured FH modes are not limited to those of case A and case B.

The UE may apply a given FH mode based on a given condition among a plurality of configured FH modes. For example, the UE may select one FH mode from among a plurality of FH modes configured based on a PUSCH scheduling condition.

The UE may apply a configured FH mode when a PUSCH to which mini-slot based repetition is applied is not divided into segments (or when the PUSCH is not across a slot boundary). The configured FH mode may be inter-PUSCH-repetition FH in case A or inter-slot FH in case B.

When a PUSCH to which mini-slot based repetition is applied is divided into segments (or when the PUSCH is across a slot boundary), the UE may apply another FH mode. The other FH mode may be intra-PUSCH-repetition FH in case A or B.

Note that, when one of a plurality of PUSCHs to which mini-slot based repetition is applied is divided into a plurality of segments (or is across a slot boundary), the UE may apply different FH modes to the one PUSCH and any other PUSCH. Alternatively, the UE may apply a common FH mode to the one PUSCH and any other PUSCH.

In this manner, it is possible to flexibly switch between a plurality of FH modes based on a communication situation and the like to apply, by allowing configuration of a plurality of FH modes to the UE.

(Third Aspect)

In a third aspect, FH mode switching control will be described below. The description is made by using, as an example, switching control of an FH mode configured for mini-slot base, but may be applied to an FH mode configured for slot base or may be applied only to an FH mode configured for mini-slot base.

The UE may change an FH mode initially configured by higher layer signaling to another FH mode. For example, the UE may control FH mode switching (or change) by using at least one of options 3-1 to 3-3 described below.

<Option 3-1>

The UE may change an applied FH mode (or parameter of the FH mode) based on information notified by higher layer signaling.

<Option 3-2>

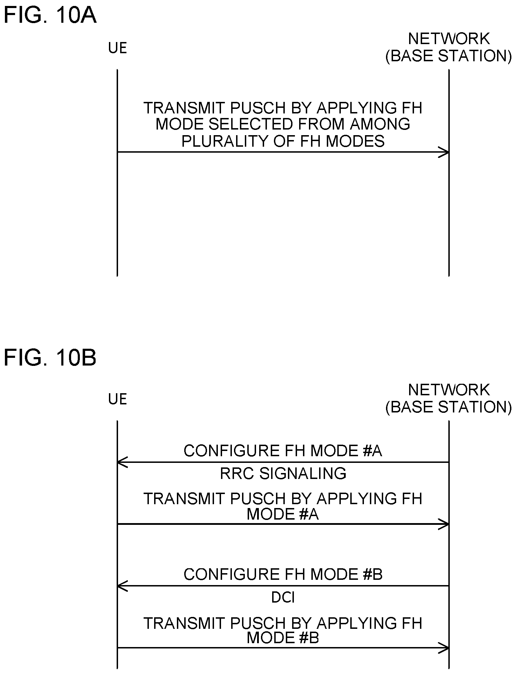

The UE may dynamically switch or configure an applied FH mode based on a given condition (refer to FIG. 10A). The given condition may be, for example, a PUSCH repetition condition or a parameter of a PUSCH to which repetitive transmission is applied.

The UE may control an applied FH mode based on a repetition style (option 3-2-1). The repetition style may be classified based on the duration in which a repetition PUSCH (for example, K pieces of PUSCH. K being a repetition factor) is transmitted or mapped.

For example, when the duration in which a repetition PUSCH is transmitted or mapped is within the range of one slot, the UE may select one FH mode from among a plurality of FH modes. The plurality of FH modes may be intra-slot FH and inter-PUSCH-repetition FH.

When the duration in which a repetition PUSCH is transmitted or mapped is in a range longer than one slot, the UE may select one FH mode from among a plurality of FH modes. The plurality of FH modes may be inter-PUSCH-repetition FH and inter-slot FH. Note that the plurality of FH modes may be intra-PUSCH-repetition FH and inter-slot FH.

Accordingly, it is possible to dynamically switch at least intra-slot FH and inter-slot FH in accordance with the duration in which a repetition PUSCH is transmitted. Note that a plurality of FH modes may be configured by higher layer signaling or the like in advance, or may not be configured by higher layer signaling or the like in advance.

Alternatively, the UE may control an applied FH mode based on at least one of the length (also referred to as repetition length) and repetition factor of each PUSCH transmitted with repetition (option 3-2-2).

For example, when one repetition length is larger than a given value X, the UE may apply a given FH mode (for example, intra-PUSCH-repetition FH). On the other hand, when the repetition length is equal to or smaller than X, the UE may apply another FH mode (for example, inter-slot FH). The value X may be defined in specifications or may be configured for the UE by the base station. For example, X may be seven (X = 7).

When the length of each PUSCH transmitted with repetition is larger than X (for example, seven) symbols, repetitive transmission is configured beyond one symbol. In such a case, at least one of a plurality of PUSCHs transmitted with repetition is likely to be divided into a plurality of segments. Thus, it is possible to appropriately apply hopping to the segment PUSCHs by applying intra-PUSCH-repetition FH to the PUSCH divided into segments.

Note that intra-PUSCH-repetition FH may be applied to some PUSCHs (for example, segment PUSCHs) among a plurality of repetition PUSCHs, and a different FH mode may be applied to the other PUSCHs. Alternatively, the same FH mode (for example, intra-PUSCH-repetition FH) may be applied to all PUSCH repetitions.

When the repetition factor is a given value, the UE may apply a given FH mode (for example, intra-slot FH or intra-PUSCH-repetition FH). When the repetition factor is a value other than the given value, the UE may apply another FH mode (for example, inter-PUSCH-repetition FH). The given value may be defined in specifications or may be configured for the UE by the base station. For example, the given value may be one.

Accordingly, it is possible to apply an appropriate FH mode to each of a case in which a PUSCH is transmitted once and a case in which a PUSCH is transmitted a plurality of times.

<Option 3-3>

The UE may change an FH mode (for example, FH mode #A) configured by higher layer signaling to another FH mode (for example, FH mode #B) specified by the DCI or may reconfigure the other FH mode (refer to FIG. 10B). Information related to the other FH mode may be notified to the UE by a given field included in the DCI, may be associated with a given DCI format, or may be associated with RNTI scrambling the DCI that schedules a PUSCH.

It is possible to flexibly control an FH mode by allowing FH mode switching or changing based on the DCI.

(Fourth Aspect)

In a fourth aspect, control of a parameter applied to an FH mode will be described below. The description is made by using, as an example, a parameter applied to an FH mode configured for mini-slot base, but may be applied to an FH mode configured for slot base or may be applied only to an FH mode configured for mini-slot base.

The UE may apply or configure, to the FH mode for mini-slot base, a parameter (for example, parameter of the FH mode for slot base) supported in an existing system (for example, Rel. 15). Alternatively, a new parameter may be applied or configured to the FH mode for mini-slot base. For example, the UE may determine a parameter of an FH mode by using at least one of options 4-1 to 4-2 described below.

<Option 4-1>

A parameter of a given FH mode supported in the existing system may be applied to a given FH mode supported for mini-slot base. For example, the same parameter may be configured for combination of a given FH mode supported in the existing system and a given FH mode supported for mini-slot base.

Note that a parameter is an element (for example, start RB or symbol size)) used for FH application, and the value thereof may be configured to be different numerical values. Alternatively, the value of the parameter may be configured to be a common value.

For example, the same parameter (for example, parameter of intra-slot FH) may be applied to intra-slot FH and inter-PUSCH-repetition FH (inter-PUSCH repetition). Alternatively, the same parameter may be applied to inter-slot FH for slot base and inter-slot FH for mini-slot base. Of course, combination of FH modes to which the parameter is applied in common is not limited thereto.

The UE may apply an FH mode configured for mini-slot base by using a parameter supported in the existing system.

For example, consider a case in which the intra-slot frequency hopping is configured by a higher-layer parameter (for example, PUSCH configuration (pusch-Config) or configured-grantbased PUSCH configuration (configuredGrant-Config)). In such a case, the UE may apply inter-PUSCH-repetition FH to mini-slot based PUSCH repetition based on a configured parameter.

Alternatively, when inter-slot FH is configured, the UE may apply inter-slot FH to mini-slot based PUSCH repetition based on a configured parameter. Accordingly, it is possible to suppress increase in overhead of higher layer signaling.

Alternatively, combination of FH modes for which common parameter is configured may be configured by higher layer signaling. The UE may control, based on combination configured by higher layer, a parameter of an FH mode configured for mini-slot based PUSCH repetition.

<Option 4-1>

A new parameter different from a parameter of a given FH mode supported in the existing system may be supported for a given FH mode supported for mini-slot base. The UE may apply such a new parameter to at least one of a plurality of FH modes supported for mini-slot base.

For example, when a new parameter is configured for mini-slot based PUSCH repetition, the UE may apply or configure a given FH mode to a mini-slot based PUSCH. The new parameter may be configured for the UE by higher layer signaling (for example, miniSlotFrequencyHopping) .

The new parameter may be configured for a given FH mode (for example, at least one of inter-PUSCH-repetition FH and inter-slot FH). Of course, an FH mode for which the new parameter is configured is not limited thereto.

(Fifth Aspect)

In a fifth aspect, an FH mode applied to a PUSCH scheduled by UL transmission indication (also referred to as RAR grant) included in a random access response corresponding to a random access preamble will be described below.

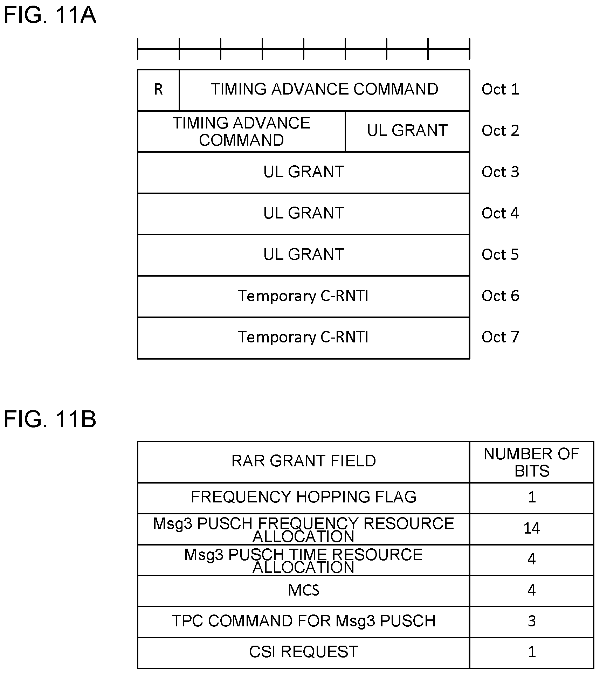

A RAR (MAC CE) corresponding to a response signal for transmission of a random access preamble includes a UL grant indicating PUSCH transmission (refer to FIG. 11A). A RAR grant includes a given field (for example, Frequency hopping flag) that indicates whether to apply frequency hopping (refer to FIG. 11B).

When a given field is one (for example, FH flag = 1), the UE applies FH to a PUSCH scheduled by the RAR. In an existing system (for example, Rel. 15), the PUSCH scheduled by the RAR is scheduled in one slot (single slot), and thus only intra-slot FH is applied as an FH mode.

It is assumed a case, on the other hand, in which mini-slot based PUSCH repetitive transmission is applied to the PUSCH scheduled by the RAR grant. In such a case, how to control an FH mode is a problem.

When mini-slot based PUSCH repetitive transmission is applied to the PUSCH scheduled by the RAR grant, the UE may apply at least one of options 5-1 to 5-2 described below when controlling FH.

<Option 5-1>

When mini-slot based repetition is configured for the PUSCH scheduled by the RAR grant, only a given FH mode (for example, intra-slot FH) may be applied. In this case, mini-slot based repetitive transmission may be performed in one slot.

The UE may control PUSCH transmission by assuming that particular FH is applied to the PUSCH scheduled by the RAR grant. UE operation can be simplified since only a particular FH mode is supported for the PUSCH scheduled by the RAR grant.

<Option 5-2>

When mini-slot based repetition is configured for the PUSCH scheduled by the RAR grant, a plurality of FH modes may be supported.

When connection is established between the UE and the network (for example, the base station), an FH mode applied to a PUSCH may be configured for the UE by using UE-specific higher layer signaling.

Alternatively, when connection is not established between the UE and the network (for example, the base station), an FH mode applied to a PUSCH may be configured for the UE by using given system information (for example, SIB1).

In this manner, it is possible to flexibly control PUSCH transmission by supporting a plurality of FH modes for the PUSCH scheduled by the RAR grant.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

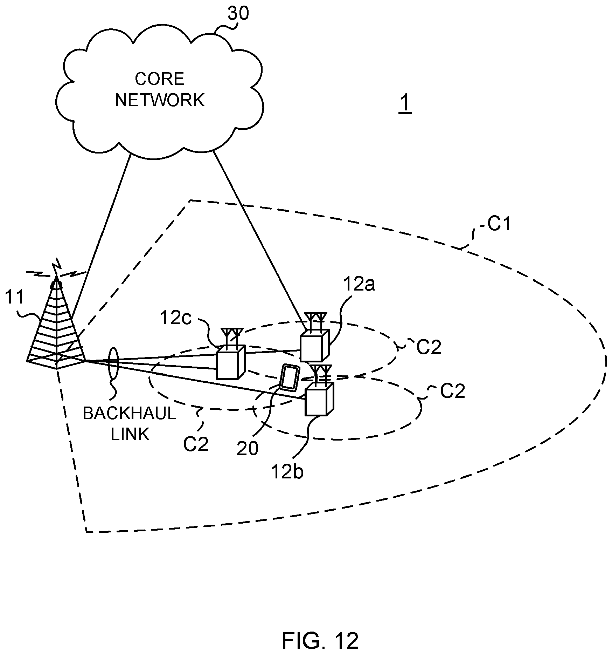

FIG. 12 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmittedas the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be transmittedas an uplink reference signal (UL-RS). Note that DMRS may be referred to as a "user terminal specific reference signal (UE-specific Reference Signal)."

(Base Station)

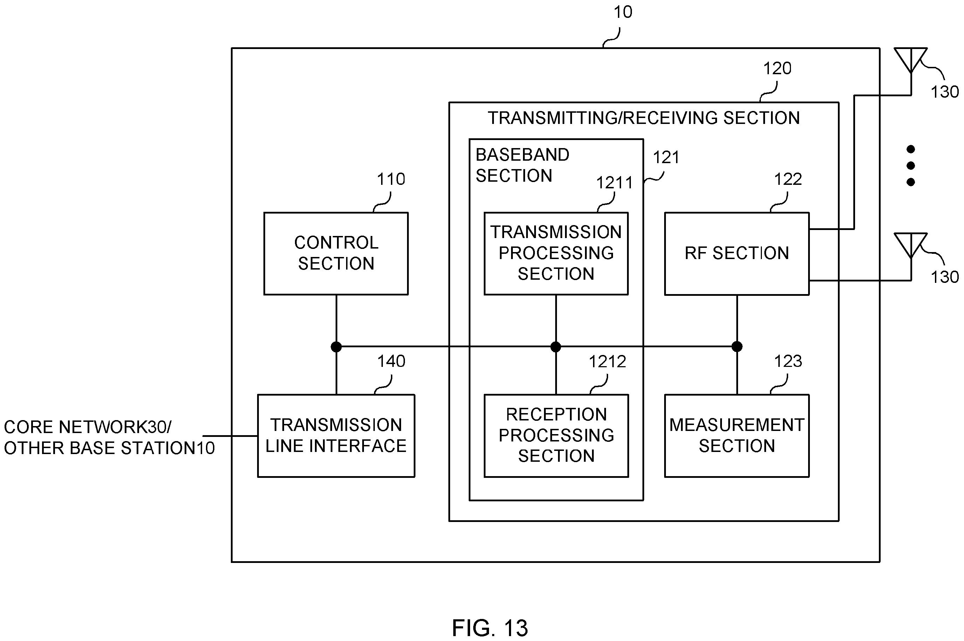

FIG. 13 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 transmits information related to one or a plurality of frequency hopping modes by using at least one of higher layer signaling and DCI. The transmitting/receiving section 120 may receive an UL channel (for example, PUSCH) to which a given frequency hopping mode is applied.

The control section 110 may perform control to configure, in common, information related to a frequency hopping mode, or separately configure information related to the frequency hopping mode, to a first uplink shared channel to which repetitive transmission in a first unit is applied and a second uplink shared channel to which repetitive transmission in a second unit shorter than the first unit is applied.

(User Terminal)

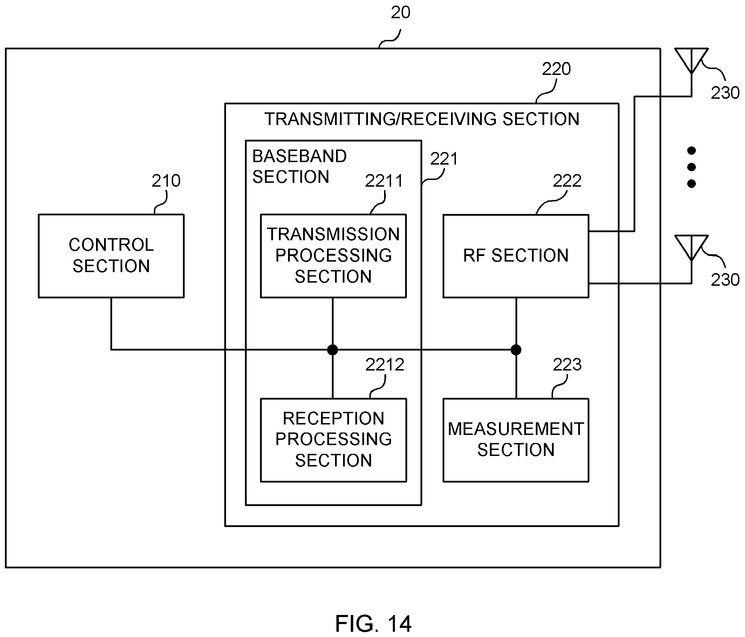

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (the RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (the RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (the measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 receives information related to one or a plurality of frequency hopping modes. The transmitting/receiving section 220 may transmit an uplink channel to which a given frequency hopping mode is applied.

The control section 210 may determine, based on information related to the same frequency hopping mode or information related to different frequency hopping modes, a frequency hopping mode to be applied to each of a first uplink shared channel to which repetitive transmission in a first unit is applied and a second uplink shared channel to which repetitive transmission in a second unit shorter than the first unit is applied.

The number of frequency hopping modes configured or supported for the first uplink shared channel may be different from the number of frequency hopping modes configured or supported for the second uplink shared channel.

The control section 210 may determine a frequency hopping mode to be applied to each of a plurality of second uplink shared channels to which repetitive transmission is applied in the second unit, based on at least one of the transmission duration of the second uplink shared channel, the length of the second uplink shared channel, and the number of repetitive transmissions in the second unit.

The control section 210 may control a frequency hopping mode configured for the second uplink shared channel, by using a frequency hopping parameter configured for the first uplink shared channel.

The control section 210 may apply a frequency hopping mode notified by system information, when transmission of the second uplink control channel is indicated by information included in a random access response.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

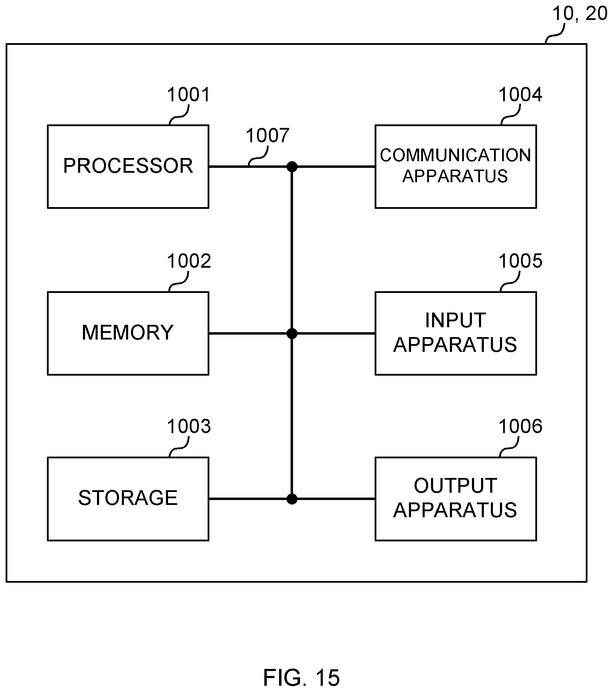

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG)," a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a receiving section configured to receive information related to one or a plurality of frequency hopping modes; and
   a control section configured to determine, based on information related to the same frequency hopping mode or information related to different frequency hopping modes, a frequency hopping mode to be applied to each of a first uplink shared channel to which repetitive transmission in a first unit is applied and a second uplink shared channel to which repetitive transmission in a second unit shorter than the first unit is applied .

2. The terminal according to claim 1, wherein
   the number of frequency hopping modes configured or supported for the first uplink shared channel is different from the number of frequency hopping modes configured or supported for the second uplink shared channel.

3. The terminal according to claim 1 or 2, wherein
   the control section determines, based on at least one of a transmission duration of a plurality of second uplink shared channel to which repetitive transmission is in the second unit applied, the length of the second uplink shared channel, and the number of repetitive transmissions in the second unit, a frequency hopping mode to be applied to the second uplink shared channel.

4. The terminal according to any one of claims 1 to 3, wherein
   the control section controls a frequency hopping mode configured for the second uplink shared channel, by using a frequency hopping parameter configured for the first uplink shared channel.

5. The terminal according to any one of claims 1 to 4, wherein
   the control section applies a frequency hopping mode notified by system information, when transmission of the second uplink control channel is indicated by information included in a random access response.

6. A radio communication method comprising:

   receiving information related to one or a plurality of frequency hopping modes; and

determining, based on information related to the same frequency hopping mode or information related to different frequency hopping modes, a frequency hopping mode to be applied to each of a first uplink shared channel to which repetitive transmission in a first unit is applied and a second uplink shared channel to which repetitive transmission in a second unit shorter than the first unit is applied.

FIG. 1

FIG. 2A

FIG. 2B

EP 4 021 107 A1

FIG. 3

# FIG. 4

EP 4 021 107 A1

**FIG. 5A**

SYMBOL INDEX

SLOT #n — Symbol index: 0 1 2 3 4 5 6 7 8 9 10 11 12 13

SLOT #n+1 — Symbol index: 0 1 2 3 4 5 6 7 8 9 10 11 12 13

INTER-PUSCH-REPETITION FH (Inter-PUSCH-repetition FH)

Rep#0 — 4-SYMBOL PUSCH

Rep#1 — 4-SYMBOL PUSCH

Rep#2 — 4-SYMBOL PUSCH

Rep#3 — 4-SYMBOL PUSCH

SLOT BOUNDARY

SLOT BOUNDARY

SLOT BOUNDARY

**FIG. 5B**

SYMBOL INDEX

SLOT #n — Symbol index: 0 1 2 3 4 5 6 7 8 9 10 11 12 13

SLOT #n+1 — Symbol index: 0 1 2 3 4 5 6 7 8 9 10 11 12 13

INTER-SLOT FH (Inter-slot FH)

Rep#0 — 4-SYMBOL PUSCH

Rep#1 — 4-SYMBOL PUSCH

Rep#2 — 4-SYMBOL PUSCH

Rep#3 — 4-SYMBOL PUSCH

SLOT BOUNDARY

SLOT BOUNDARY

SLOT BOUNDARY

27

## FIG. 6

SLOT #n · SLOT #n+1

SYMBOL INDEX

0 1 2 3 4 5 6 7 8 9 10 11 12 13 0 1 2 3 4 5 6 7 8 9 10 11 12 13

INTRA-PUSCH-REPETITION FH
(Intra-PUSCH-repetition FH)

7-SYMBOL PUSCH
Rep#0

SEGMENTATION

Rep#0_0 · Rep#0_1

REPETITION SIZE ADJUSTMENT

Rep#0_0_1 · Rep#0_1

Rep#0_0_2

INTRA-PUSCH FH
(Intra-PUSCH FH)

SINGLE-SEGMENT
TRANSMISSION

SLOT BOUNDARY · SLOT BOUNDARY · SLOT BOUNDARY

EP 4 021 107 A1

FIG. 7

EP 4 021 107 A1

FIG. 8A

UE                                        NETWORK
                                      (BASE STATION)

          CONFIGURE FH MODE FOR SLOT BASE
                  (+MINI-SLOT BASE)

          TRANSMIT MINI-SLOT BASED PUSCH BY
             APPLYING CONFIGURED FH MODE


図8B

UE                                        NETWORK
                                      (BASE STATION)

              CONFIGURE FH MODE #A
                 FOR SLOT-BASE

              CONFIGURE FH MODE #B
               FOR MINI-SLOT-BASE

          TRANSMIT MINI-SLOT BASED PUSCH
               BY APPLYING FH MODE #B


FIG. 8C

UE                                        NETWORK
                                      (BASE STATION)

          CONFIGURE FH MODE FOR SLOT BASE
                  (+MINI-SLOT BASE)

                  RRC SIGNALING

          CONFIGURE FH MODE FOR MINI-SLOT
                       BASE

                 DCI/RRC SIGNALING

EP 4 021 107 A1

## FIG. 9A

UE                       NETWORK
(BASE STATION)

CONFIGURE ONLY FH MODE #A

TRANSMIT PUSCH TO WHICH FH MODE
#A IS APPLIED

## FIG. 9B

UE                       NETWORK
(BASE STATION)

CONFIGURE FH MODES #A AND #B

TRANSMIT PUSCH BY SELECTING ONE
OF FH MODES #A AND #B

EP 4 021 107 A1

## FIG. 10A

UE

NETWORK
(BASE STATION)

TRANSMIT PUSCH BY APPLYING FH
MODE SELECTED FROM AMONG
PLURALITY OF FH MODES

## FIG. 10B

UE

NETWORK
(BASE STATION)

CONFIGURE FH MODE #A
RRC SIGNALING

TRANSMIT PUSCH BY APPLYING FH
MODE #A

CONFIGURE FH MODE #B
DCI

TRANSMIT PUSCH BY APPLYING FH
MODE #B

## FIG. 11A

| | | |
|---|---|---|
| R | TIMING ADVANCE COMMAND | Oct 1 |
| TIMING ADVANCE COMMAND | UL GRANT | Oct 2 |
| UL GRANT | | Oct 3 |
| UL GRANT | | Oct 4 |
| UL GRANT | | Oct 5 |
| Temporary C-RNTI | | Oct 6 |
| Temporary C-RNTI | | Oct 7 |

## FIG. 11B

| RAR GRANT FIELD | NUMBER OF BITS |
|---|---|
| FREQUENCY HOPPING FLAG | 1 |
| Msg3 PUSCH FREQUENCY RESOURCE ALLOCATION | 14 |
| Msg3 PUSCH TIME RESOURCE ALLOCATION | 4 |
| MCS | 4 |
| TPC COMMAND FOR Msg3 PUSCH | 3 |
| CSI REQUEST | 1 |

30

CORE
NETWORK

1

C1

11

12a

12c

C2

C2

BACKHAUL
LINK

C2

20

12b

FIG. 12

FIG. 13

EP 4 021 107 A1

EP 4 021 107 A1

20

TRANSMITTING/RECEIVING SECTION 220

BASEBAND SECTION 221

TRANSMISSION PROCESSING SECTION 2211

CONTROL SECTION 210

RF SECTION 222

230

230

RECEPTION PROCESSING SECTION 2212

MEASUREMENT SECTION 223

FIG. 14

10, 20

1001

PROCESSOR

1007

1004

COMMUNICATION APPARATUS

1002

MEMORY

1005

INPUT APPARATUS

1003

STORAGE

1006

OUTPUT APPARATUS

FIG. 15

## INTERNATIONAL SEARCH REPORT

| | International application No. |
|---|---|
| | PCT/JP2019/033156 |

**A. CLASSIFICATION OF SUBJECT MATTER**
H04W 72/04(2009.01)i
FI: H04W72/04 137; H04W72/04 132

According to International Patent Classification (IPC) or to both national classification and IPC

**B. FIELDS SEARCHED**

Minimum documentation searched (classification system followed by classification symbols)
H04W72/04

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | ERICSSON, "PUSCH Enhancements for NR URLLC[online]", 3GPP TSG RAN WG1 #98 R1-1908122, 17 August 2019, section 7 section 7 | 1-3, 6 |
| A | section 7 | 4-5 |
| A | QUALCOMM INCORPORATED, "Correction for PUSCH frequency hopping in VoLTE enhancements[online]", 3GPP TSG RAN WG1 #97 R1-1907608, 17 May 2019, whole document | 4 |
| A | ERICSSON, "Procedure for Two-step RACH[online]", 3GPP TSG RAN WG1 #98 R1-1909123, 17 August 2019, whole document whole document | 5 |

☐ Further documents are listed in the continuation of Box C.     ☐ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 27 February 2020 (27.02.2020) | 10 March 2020 (10.03.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**EP 4 021 107 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010